# EUROPÄISCHE PATENTSCHRIFT

(11) **EP 1 725 421 B1**
(45) Veröffentlichungstag und Bekanntmachung des Hinweises auf die Patenterteilung: **11.05.2011**
(21) Anmeldenummer: 05715082.3
(22) Anmeldetag: 10.03.2005
(51) Int. Cl.: B60L 13/04, B60L 13/06, B60L 13/10

(54) **VERFAHREN BEI EINEM MAGNETSCHWEBEFAHRZEUG ZUR REGELUNG VON TRAGSPALTEN UND MAGNETSCHWEBEFAHRZEUG MIT NACH DIESEM VERFAHREN ARBEITENDEN REGELKREISEN**
METHOD FOR CONTROL OF SUPPORT GAPS FOR A MAGNETIC LEVITATION VEHICLE AND MAGNETIC LEVITATION VEHICLE WITH A CONTROL CIRCUIT OPERATING WITH SAID METHOD
PROCEDE DE REGULATION D'ESPACES DE SUSTENTATION SUR UN VEHICULE A SUSTENTATION MAGNETIQUE ET VEHICULE A SUSTENTATION MAGNETIQUE A BOUCLE DE REGULATION FONCTIONNANT SELON CE PROCEDE

(30) Priorität: 18.03.2004 DE 102004013692
(43) Veröffentlichungstag der Anmeldung: 29.11.2006
(73) Patentinhaber: ThyssenKrupp Transrapid GmbH, 34127 Kassel (DE)
(72) Erfinder: BECK, Thomas, 84405 Dorfen (DE); ELLMANN, Siegfried, 85609 Aschheim (DE); HUBER, Olaf, 81673 München (DE)
(74) Vertreter: Lorenz, Bernd Ingo Thaddeus
(86) Internationale Anmeldenummer: PCT/DE2005/000418
(87) Internationale Veröffentlichungsnummer: WO 2005/092661

(56) Entgegenhaltungen:
- DE-A1- 3 413 016
- DE-A1- 4 023 067
- US-A- 3 865 043
- US-A- 4 140 063
- US-A- 4 731 569

## Beschreibung

Die Erfindung betrifft ein Verfahren nach dem Oberbegriff des Anspruchs 1 und ein Magnetschwebefahrzeug nach dem Oberbegriff des Anspruchs 2.

Magnetschwebefahrzeuge, insbesondere solche mit Langstator-Linearmotoren, weisen eine Anzahl von in Fahrtrichtung hintereinander angeordneten Tragmagneten auf, die einem Fahrweg für das Magnetschwebefahrzeug, insbesondere einem an diesem angebrachten Langstator, gegenüber stehen. Beim Betrieb des Magnetschwebefahrzeugs werden zunächst die Tragmagnete aktiviert, um zwischen dem Fahrweg und dem Magnetschwebefahrzeug Tragspalte vorgegebener Größe (z. B. 10 mm) auszubilden. Daran anschließend wird das Magnetschwebefahrzeug in Bewegung versetzt, wobei im Falle von Langstator-Linearmotoren die Tragmagnete gleichzeitig das Erregerfeld für den Linearmotor liefern (z. B. DE 39 17 058 C1). Die Einhaltung der für die Tragspalte vorgegebenen Sollwerte wird mit Spaltsensoren (z. B. DE 35 16 036 C2) und an diese angeschlossenen Regelkreisen sichergestellt, die elektrischen Ströme in den Wicklungen der Tragmagnete derart steuern, dass die Tragspalte beim Betrieb im Wesentlichen gleich groß bleiben (z. B. US-A 3 865 043, "Magnetschnellbahn Transrapid-Technik und System", Thyssen Transrapid GmbH, MSB Tr 10/96).

Die Tragmagnete derartiger Magnetschwebefahrzeuge sind in der Regel an Gestellbügeln montiert, die ihrerseits an Schweberahmen oder dgl. für einen Wagenkasten befestigt sind. Dabei ist der mechanische Aufbau vorzugsweise so gewählt, dass an den Längsenden der Schweberahmen je zwei, an unterschiedlichen Tragmagneten befestigte Gestellbügel vorgesehen sind, so dass dort wenigstens zwei benachbarte Tragmagnete auf den Schweberahmen einwirken.

Aufgrund von unvermeidlichen Toleranzen z. B. in den die Istwerte der Tragspalte anzeigenden Sensorsignalen, in den mit den Sensoren verbundenen Regelkreisen sowie in der mechanischen Struktur kommt es vor, dass die Wicklungen benachbarter Tragmagnete, obwohl diese denselben Tragspalt herstellen, von unterschiedlich großen Strömen durchflossen werden. Das ist unerwünscht, weil unterschiedliche Ströme zu unterschiedlichen Belastungen der Wicklungen z. B. durch Wärmeentwicklung führen.

Das der Erfindung zugrunde liegende technische Problem besteht daher darin, das Verfahren und das Magnetschwebefahrzeug der eingangs bezeichneten Gattungen so zu modifizieren, dass etwaige Unterschiede zwischen den die Wicklungen benachbarter Tragmagnete durchfließenden Strömen trotz der genannten Toleranzen weitgehend reduziert oder sogar auf Null gebracht werden.

Zur Lösung dieses Problems dienen die kennzeichnenden Merkmale der Ansprüche 1 und 2.

Die Erfindung bringt den Vorteil mit sich, dass beim Auftreten unerwünschter Differenzen zwischen den Wicklungsströmen benachbarter Tragmagnete eine Nivellierung der Magnetströme vorgenommen wird und stattdessen geringfügige Unterschiede bei den von den zugehörigen Tragmagneten erzeugten Tragspalten in Kauf genommen werden. Derartige Abweichungen von den Sollwerten für die Tragspalte werden von den mechanischen Strukturen der Schwebegestelle aufgenommen, ohne dass der Fahrkomfort beeinträchtigt wird oder andere Nachteile auftreten, und können daher ohne weiteres toleriert werden.

Weitere vorteilhafte Merkmale der Erfindung ergeben sich aus den Unteransprüchen.

Die Erfindung wird nachfolgend in Verbindung mit den beiliegenden Zeichnungen an einem Ausführungsbeispiel näher erläutert. Es zeigen:
Fig. 1 schematisch einen Teilschnitt durch ein übliches Magnetschwebefahrzeug im Bereich eines mit einem Langstator versehenen Fahrwegs;
Fig. 2 schematisch zwei Regelkreise für benachbarte Tragmagnete eines Magnetschwebefahrzeugs; und
Fig. 3 in verschiedenen Schaubildern die mit der Erfindung verfolgte Regelstrategie.

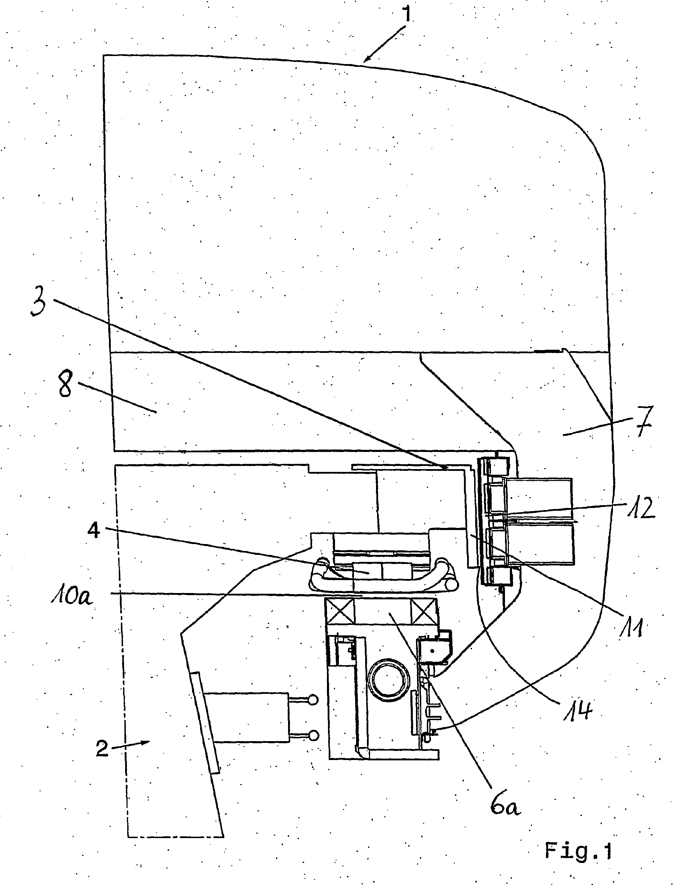

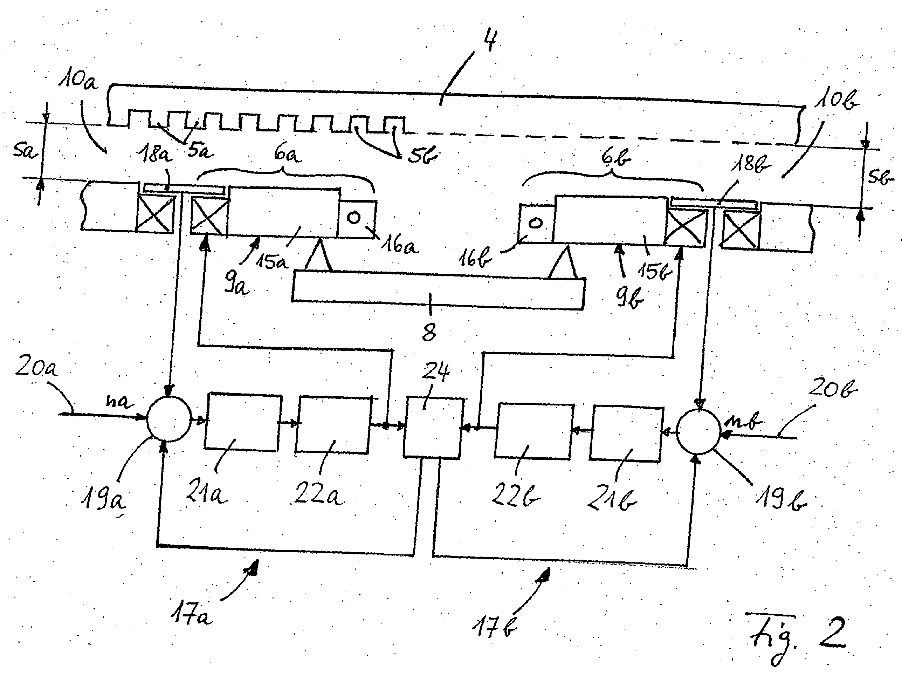

Fig. 1 und 2 zeigen schematisch ein Magnetschwebefahrzeug 1, das in üblicher Weise auf einem in Längsrichtung einer Trasse verlaufenden Fahrweg fahrbar montiert ist, der aus Stahl und/oder Beton hergestellte Träger 2 und auf diesen montierte Fahrwegplatten 3 enthält. Der Antrieb des Magnetschwebefahrzeugs 1 erfolgt z. B. mittels eines Langstatormotors, der unterhalb der Fahrwegplatte 3 des Fahrwegs befestigte, in deren Längsrichtung aufeinander folgende Statorpakete 4 aufweist. Die Statorpakete 4 weisen nach Fig. 2 abwechselnd aufeinander folgende Zähne 5a und nach unten offene Nuten 5b auf, in die in bekannter Weise nicht dargestellte Dreiphasen-Wechselstrom-Wicklungen eingelegt sind, die mit Drehstrom variabler Amplitude und Frequenz gespeist werden. Das eigentliche Erregerfeld des Langstatormotors wird durch als Tragmagnete 6a, 6b wirkende Magnetanordnungen erzeugt, die mit wenigstens einem seitlichen Gestellbügel 7 an einem Schweberahmen 8 des Magnetschwebefahrzeugs 1 befestigt sind und den Nuten 5b der Statorpakete 4 zugewandte Magnetpole 9a, 9b aufweisen. Die Tragmagnete 6a, 6b stellen nicht nur das Erregerfeld bereit, sondern erfüllen auch die Funktion des Tragens und Schwebens, indem sie beim Betrieb des Magnetschwebefahrzeugs 1 vorgegebene Spalte 10a bzw. 10b mit Größen sa bzw. sb (Fig. 2) zwischen den Tragmagneten 6a, 6b und dem Fahrweg bzw. dessen Statorpaketen 4 aufrecht erhalten.

Zur Spurführung des Magnetschwebefahrzeugs 1 weist die Fahrwegplatte 3 seitlich angebrachte Führschienen 11 auf, denen ebenfalls an den Gestellbügeln 7 montierte Führmagnete 12 gegenüberstehen, die beim Betrieb dazu dienen, zwischen sich und der Führschiene 11 einen dem Spalt 10a, 10b entsprechenden Spalt 14 aufrechtzuerhalten.

Magnetschwebefahrzeuge 1 und deren Magnetanordnungen sind dem Fachmann z. B. aus den Druckschriften US-PS 4,698,895, DE 39 28 278 A1 und PCT WO 97/30504 A1 allgemein bekannt, die hiermit der Einfachheit halber durch Referenz zum Gegenstand der vorliegenden Offenbarung gemacht werden.

Das Ausführungsbeispiel nach Fig. 2 zeigt zwei benachbarte bzw. in Fahrtrichtung des Magnetschwebefahrzeugs 1 hintereinander angeordnete Tragmagnete 6a und 6b, von denen jeweils nur zwei einander zugewandte Endabschnitte mit je einem Magnetpol 9a bzw. 9b dargestellt sind. Tatsächlich enthält jeder Tragmagnet 6a, 6b vorzugsweise je eine Magnetanordnung mit einer Anzahl von z. B. zwölf in Fahrtrichtung beabstandeten Magnetpolen 9a bzw. 9b. Jeder Magnetpol 9a, 9b besitzt einen Kern 15a, 15b und eine diesen umgebende Wicklung 16a bzw. 16b.

Die Tragmagnete 6a, 6b stehen den Statorpaketen 4 beispielsweise derart gegenüber, daß die Größen sa bzw. sb der Tragspalte 10a, 10b in einem Außerbetriebszustand des Magnetschwebefahrzeugs 1, d. h. wenn sich dieses in einem auf einer Gleitschiene abgesetzten Zustand befindet, z. B. 17 mm beträgt, während beim Betrieb des Fahrzeugs 1 ein Wert von z. B. 10 mm eingehalten wird, der den für das Magnetschwebefahrzeug 1 typischen Schwebezustand herstellt.

Zur Aufrechterhaltung der vorgegebenen Sollwerte von z. B. 10 mm für die Tragspalte 10a, 10b dienen in Fig. 2 schematisch angedeutete Regelkreise 17a und 17b. Der Regelkreis 17a weist einen Spaltsensor 18a auf, der die aktuelle Größe bzw. den Istwert sa des Spalts 10a zwischen dem Tragmagneten 6a bzw. dessen Magnetpol 9a und den Statorpaketen 4 mißt und ein elektrisches Signal liefert, das dem Istwert der Größe sa entspricht. Der Spaltsensor 18a ist über eine Vergleichsschaltung 19a, der über eine Leitung 20a ein Sollwert na für den Spalt 10a zugeführt wird, an einen Regler 21a angeschlossen. Die Vergleichsschaltung 19a vergleicht die Istwerte sa des Spaltsensors 18a mit dem Sollwert na und liefert an ihrem Ausgang ein Differenzsignal, anhand dessen im Regler 21a ein Steuersignal erzeugt und einem Stellglied 22a zugeführt wird. Das Stellglied 22a erzeugt einen elektrischen Strom für die Wicklung 16a des Tragmagneten 6a und versorgt diese Wicklung 16a insbesondere mit einem solchen Strom, daß die Größe sa des Tragspalts 10a beim Betrieb stets im wesentlichen dem über die Leitung 20a vorgegebenen Sollwert na entspricht.

Der Regelkreis 17b ist entsprechend aufgebaut, weshalb seine Teile mit den entsprechenden Bezugszeichen 18b bis 22b und nb bezeichnet sind. Der Regelkreis 17b dient zur Regelung eines Spalts 10b von der Größe sb zwischen dem Tragmagneten 6b und den Statorpaketen 4.

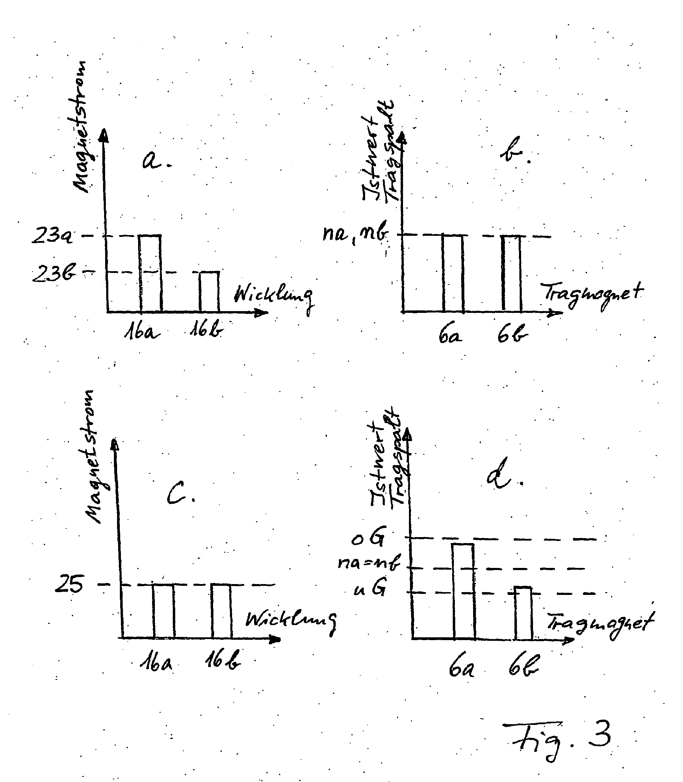

In Fig. 2 ist schließlich schematisch einer der Schweberahmen 8 des Magnetschwebefahrzeugs 1 angedeutet, der an einem Ende vom Tragmagneten 6a und am anderen Ende vom benachbarten Tragmagneten 6b getragen wird. Im Normalfall sollten daher beide Tragmagnete 6a und 6b den zugehörigen Tragspalt 10a, 10b auf im wesentlichen identische Werte na und nb einstellen, wie schematisch in Fig. 3b dargestellt ist. Dabei kann es aufgrund der eingangs erläuterten Toleranzen (z. B. Fehlern in den Meßsignalen der Spaltsensoren 18a, 18b) dazu kommen, daß die Ströme durch die Wicklungen 16a, 16b der beiden auf den Schweberahmen 8 einwirkenden Tragmagnete 6a bzw. 6b unterschiedlich sind. Das ist beispielhaft in Fig. 3a angedeutet, wo das Bezugszeichen 23a den Strom durch die Wicklung 16a und das Bezugszeichen 23b den Strom durch die Wicklung 16b andeutet. Zur Vermeidung derart unterschiedlicher Ströme wird erfindungsgemäß wie folgt vorgegangen.

Es wird zunächst eine Korrekturschaltung 24 (Fig. 1) vorgesehen, die zwei mit den Ausgängen der Stellglieder 22a, 22b verbundene Eingänge und zwei Ausgänge auf weist, die zu je einer der beiden Vergleichsschaltungen 19a, 19b führen, an die auch die Leitungen 20a, 20b angeschlossen sind, die die Sollwerte na, nb für die Tragspalte 10a, 10b vorgeben. In der Korrekturschaltung 24 werden anhand der unterschiedlichen Ausgangswerte der Stellglieder 22a bzw. 22b, die den durch die Wicklungen 16a, 16b fließenden Strömen 23a, 23b (Fig. 2a) proportional sind, Korrekturwerte für die Sollwerte na, nb der Tragspalte 10a, 10b berechnet. Im speziellen Fall (Strom 23a > Strom 23b) wird aus dieser Stromdifferenz ein Signal für die Vergleichsschaltung 19b berechnet, durch das der Sollwert nb für den Tragspalt 10b verkleinert wird. Dadurch erhält die Wicklung 16b mehr Strom mit der Folge, daß der Tragspalt 10b im Vergleich zum Tragspalt 10a kleiner wird, wie Fig. 3d zeigt. Diese Beeinflussung des Sollwerts nb erfolgt so lange, bis die Ströme durch die beiden Wicklungen 16a, 16b im wesentlichen gleich sind.

Allerdings wird für den Tragspalt 10b ein unterer Grenzwert, d. h. ein vorgewählter Minimalwert vorgegeben, der z. B. bei 9 mm statt der üblichen 10 mm liegt und in Fig. 3d mit uG bezeichnet ist. Ist beim Erreichen dieses Grenzwertes uG immer noch kein Ausgleich der Ströme durch die Wicklungen 16a, 16b erreicht, dann wird jetzt auch der Vergleichsschaltung 19a ein Korrekturwert zugeführt, durch den der Sollwert für den Strom durch die Wicklung 16a reduziert wird. Das hat zur Folge, daß das Maß sa des Tragspalts 10a größer wird, als dem Sollwert na entspricht (Fig. 2d). Auch diese Korrektur erfolgt nur, so lange, bis ein oberer Grenzwert oG, d. h. z. B. ein vorgegebener Maximalwert von 11 mm statt der üblichen 10 mm erreicht ist.

Normalerweise kann auf die beschriebene Weise stets ein Ausgleich der Wicklungsströme entsprechend einem Wert 25 in Fig. 3c erreicht werden, und das Magnetschwebefahrzeug 1 wird dann mit geringfügig unterschiedlichen Tragspalten 10a, 10b betrieben. Selbst wenn die Ströme durch die beiden Wicklungen 16a, 16b nach Vornahme der beschriebenen Korrekturen immer noch nicht identisch sein sollten, sind sie doch wenigstens so weit aneinander angenähert, daß einerseits die resultierenden unterschiedlichen thermischen Verluste in den Wicklungen 16a, 16b in Kauf genommen werden können und andererseits die erhaltenen Werte sa, sb für die Tragspalte 10a, 10b ausreichend nahe bei den gewünschten Sollwerten na, nb liegen, so daß auch die damit verbundenen unterschiedlichen Lastverteilungen toleriert werden können. Die einmal mit der Korrekturschaltung 24 festgestellten Differenzen zwischen den Wicklungsströmen bleiben in der Regel permanent erhalten. Sollten sie sich jedoch im Laufe des Betriebs des Magnetschwebefahrzeugs ändern, wird zunächst die Vergrößerung des Tragspalts 10a und, falls erforderlich, danach auch die Verkleinerung des Tragspalts 10b zurückgenommen. Außerdem werden die beschriebenen Korrekturen der Sollwerte na, nb beim Ausfall eines der beteiligten Tragmagnete 6a, 6b sofort zurückgenommen.

Die beschriebene Regelstrategie sieht somit beim Auftreten der beschriebenen, unvermeidlichen Fertigungstoleranzen und dgl. vor, nicht die Tragspalte 10a, 10b auf gleichen vorgewählten Werten sa bzw. sb konstant zu halten, sondern unter Tolerierung kleinerer Spaltabweichungen für möglichst gleiche Wicklungsströme 25 (Fig. 3c) zu sorgen.

Die Erfindung ist nicht auf das beschriebene Ausführungsbeispiel beschränkt, das auf vielfache Weise abgewandelt werden könnte. Dies gilt insbesondere für die nur beispielhaft angegebenen Werte für die Größen na, nb der Tragspalte 10a und 10b und deren obere bzw. unteren Grenzwerte. Weiter stellt die Korrekturschaltung 24 nur ein mögliches Mittel zur Korrektur der Sollwerte na, nb dar, da der Regelungsfachmann diese Korrekturen auch auf jede andere zweckmäßige Weise vornehmen kann. Weiterhin wäre denkbar, die beschriebene Regelung in entsprechender Abwandlung auch für die Angleichung der Wicklungsströme von mehr als zwei benachbarten Tragmagneten anzuwenden. Außerdem ist klar, daß die Zahl der Wicklungen 16a, 16b pro Tragmagnet 6a, 6b unterschiedlich gewählt und insbesondere jeder Tragmagnet 6a, 6b z. B. ein Halbmagnet sein kann, dessen Wicklungen mit einem zugeordneten, vom jeweils anderen Halbmagneten unabhängigen Regelkreis verbunden werden. Möglich wäre ferner, die Korrekturschaltung 24 in zwei Abschnitte zu unterteilen, die den Regelkreisen 17a bzw. 17b einzeln zugeordnet sind. Schließlich versteht sich, daß die verschiedenen Merkmale auch in anderen als den beschriebenen und dargestellten Kombinationen angewendet werden können.

## Patentansprüche

1. Verfahren bei einem Magnetschwebefahrzeug (1) zur Regelung von Tragspalten (10a, 10b), die beim Betrieb des Magnetschwebefahrzeugs (1) zwischen einem Fahrweg (2, 3, 4) und einer Anzahl von am Magnetschwebefahrzeug (1) befestigten, mit Wicklungen (16a, 16b) versehenen Tragmagneten (6a, 6b) ausgebildet werden, wobei mit wenigstens zwei Tragmagneten (6a, 6b) an benachbarten Stellen auf einen Schweberahmen (8) des Magnetschwebefahrzeugs (1) eingewirkt wird und elektrische, die Wicklungen (16a, 16b) durchfließende Ströme so geregelt werden, dass die Tragspalte (10a, 10b) zwischen diesen beiden Tragmagneten (6a, 6b) und dem Fahrweg (2, 3, 4) vorgegebene Sollwerte (na, nb) annehmen, **dadurch gekennzeichnet, dass** für den Fall, dass die Ströme durch die Wicklungen (16a, 16b) der benachbarten Tragmagnete (6a, 6b) unter Normalbedingungen unterschiedlich sind, die Sollwerte (na, nb) für die Tragspalte (10a, 10b) so verändert werden, dass beim Auftreten der Stromdifferenzen in den beiden beteiligten Wicklungen (16a, 16b) zuerst versucht wird, die Ströme in beiden Wicklungen (16a, 16b) **dadurch** einander gleich zu machen, dass der Strom durch die den kleineren Strom führende Wicklung (16a bzw. 16b) bis höchstens zum Erreichen eines minimalen Spalts (uG) vergrößert wird, und dass für den Fall, dass die beiden Ströme durch Vergrößerung des Stroms in der den kleineren Strom führenden Wicklung (16a bzw. 16b) nicht gleich gemacht werden können, der Strom durch die den größeren Strom führende Wicklung (16b bzw. 16a) bis höchstens zum Erreichen eines maximalen Spalts (oG) reduziert wird.

2. Magnetschwebefahrzeug mit Regelkreisen (17a, 17b) zur Regelung von Tragspalten (10a, 10b), die bei seinem Betrieb zwischen einem Fahrweg (2, 3, 4) und einer Anzahl von am Fahrzeug (1) befestigten, mit Wicklungen (16a, 16b) versehenen Tragmagneten (6a, 6b) ausgebildet werden, wobei die Regelkreise (17a, 17b) Mittel (19a bis 22a bzw. 19b bis 22b) zur Regelung von elektrischen, die Wicklungen (16a, 16b) durchfließenden Strömen derart aufweisen, dass die Tragspalte (10a, 10b) vorgegebene Sollwerte (na, nb) annehmen, **dadurch gekennzeichnet, dass** den Regelkreisen (17a, 17b) von wenigstens zwei benachbarten Tragmagneten (6a, 6b) Mittel (24) zur Korrektur der zugehörigen Sollwerte (na, nb) in Abhängigkeit von den die Wicklungen (16a, 16b) durchfließenden Strömen zugeordnet ist, wobei den Tragspalten (10a, 10b) obere und untere Grenzwerte (oG, uG) zugeordnet sind und wobei die Mittel zur Korrektur der Sollwerte (na, nb) derart eingerichtet sind, dass beim Auftreten der Stromdifferenzen in den beiden beteiligten Wicklungen (16a, 16b) zuerst versucht wird, die Ströme in beiden Wicklungen (16a, 16b) **dadurch** einander gleich zu machen, dass der Strom durch die den kleineren Strom führende Wicklung (16a bzw. 16b) bis höchstens zum Erreichen eines minimalen Spalts (uG) vergrößert wird, und dass für den Fall, dass die beiden Ströme durch Vergrößerung des Stroms in der den kleineren Strom führenden Wicklung (16a bzw. 16b) nicht gleich gemacht werden können, der Strom durch die den größeren Strom führende Wicklung (16b bzw. 16a) bis höchstens zum Erreichen eines maximalen Spalts (oG) reduziert wird.

3. Magnetschwebefahrzeug nach Anspruch 2, **dadurch gekennzeichnet, dass** die Regelkreise (17a, 17b) Stellglieder (22a, 22b) mit an die Wicklungen (16a, 16b) angeschlossenen Ausgängen und Vergleichsschaltungen (19a, 19b) für einen Vergleich der Soll- und Istwerte (na, nb bzw. sa, sb) der Tragspalte (10a, 10b) enthalten, wobei die Mittel (24) eine Korrekturschaltung enthalten, die eingangsseitig mit den Ausgängen der Stellglieder (22a, 22b) und ausgangsseitig mit den Vergleichsschaltungen (19a, 19b) verbunden ist.

4. Magnetschwebefahrzeug nach Anspruch 2 oder 3, **dadurch gekennzeichnet, dass** die Korrekturschaltung (24) im Sinne einer Stromerhöhung (Stromreduzierung) wirkt, wenn der Strom durch die Wicklung (16a, 16b) des ihm zugeordneten Tragmagneten (6a, 6b) kleiner (größer) als der Strom durch die Wicklung (16b bzw. 16a) des anderen Tragmagneten (6b bzw. 6a) ist.

## Claims

1. A method in a magnetic levitation vehicle (1) for regulating carrying gaps (10a, 10b), which are formed during operation of the magnetic levitation vehicle (1) between a track system (2, 3, 4) and a number of carrying magnets (6a, 6b), which are fastened on the magnetic levitation vehicle (1) and are provided with windings (16a, 16b), at least two carrying magnets (6a, 6b) acting on adjacent points on a levitation frame (8) of the magnetic levitation vehicle (1), and electrical currents which permeate the windings (16a, 16b) being regulated in such a manner that the carrying gaps (10a, 10b) between these two carrying magnets (6a, 6b) and the track system (2, 3, 4) assume predefined target values (na, nb), **characterized in that**, for the case in which the currents through the windings (16a, 16b) of the adjacent carrying magnets (6a, 6b) are different under normal conditions, the target values (na, nb) for the carrying gaps (10a, 10b) are changed in such a way that upon the occurrence of the current differences in the two participating windings (16a, 16b), an attempt is first made to make the currents in both windings (16a, 16b) equal to one another **in that** the current through the winding (16a or 16b) conducting the smaller current is increased until at most reaching a minimum gap (uG), and, for the case in which the two currents cannot be made equal by increasing the current in the winding (16a or 16b) conducting the smaller current, the current through the winding (16b or 16a) conducting the larger current is reduced until at most reaching a maximum gap (oG).

2. A magnetic levitation vehicle having control loops (17a, 17b) for regulating carrying gaps (10a, 10b), which are formed during its operation between a track system (2, 3, 4) and a number of carrying magnets (6a, 6b), which are fastened on the vehicle (1) and are provided with windings (16a, 16b), the control loops (17a, 17b) having means (19a to 22a or 19b to 22b) for regulating electrical currents which permeate the windings (16a, 16b) in such a way that the carrying gaps (10a, 10b) assume predefined target values (na, nb), **characterized in that** means (24) for correcting the associated target values (na, nb) as a function of the currents permeating the windings (16a, 16b) are assigned to the control loops (17a, 17b) of at least two adjacent carrying magnets (6a, 6b), upper and lower limiting values (oG, uG) being assigned to the carrying gaps (10a, 10b), and the means for correcting the target values (na, nb) being configured in such a manner that upon the occurrence of the current differences in the two participating windings (16a, 16b), the attempt is first made to make the currents in both windings (16a, 16b) equal to one another **in that** the current through the winding (16a or 16b) conducting the smaller current is increased until at most reaching a minimum gap (uG), and, for the case in which the two currents cannot be made equal by increasing the current in the winding (16a or 16b) conducting the smaller current, the current through the winding (16b or 16a) conducting the greater current is reduced until at most reaching a maximum gap (oG).

3. The magnetic levitation vehicle according to Claim 2, **characterized in that** the control loops (17a, 17b) contain actuators (22a, 22b) having outputs connected to the windings (16a, 16b) and comparison circuits (19a, 19b) for a comparison of the target and actual values (na, nb or sa, sb) of the carrying gaps (10a, 10b), the means (24) containing a correction circuit, which is connected on the input side to the outputs of the actuators (22a, 22b) and on the output side to the comparison circuits (19a, 19b).

4. The magnetic levitation vehicle according to Claim 2 or 3, **characterized in that** the correction circuit (24) acts in terms of a current increase (current reduction) when the current through the winding (16a, 16b) of the carrying magnet (6a, 6b) assigned thereto is less (greater) than the current through the winding (16b or 16a) of the other carrying magnet (6b or 6a).

## Revendications

1. Procédé pour un véhicule à sustentation magnétique (1) pour la régulation d'espaces de sustentation (10a, 10b), qui sont conçus lors du fonctionnement du véhicule à sustentation magnétique (1) entre une voie de déplacement (2, 3, 4) et un certain nombre d'aimants de sustentation (6a, 6b) fixés au véhicule à sustentation magnétique (1) et dotés de bobinages (16a, 16b), dans lequel on agit avec au moins deux aimants de sustentation (6a, 6b) en des emplacements voisins sur un cadre de sustentation (8) du véhicule à sustentation magnétique (1) et des courants électriques parcourant les bobinages (16a, 16b) sont régulés de sorte que les espaces de sustentation (10a, 10b) prennent des valeurs de consigne (na, nb) prescrites entre ces deux aimants de sustentation (6a, 6b) et la course de déplacement (2, 3, 4), **caractérisé en ce que**, dans le cas où les courants parcourant les bobinages (16a, 16b) des aimants de sustentation (6a, 6b) voisins sont différents dans des conditions normales de fonctionnement, les valeurs de consigne (na, nb) pour les espaces de sustentation (10a, 10b) sont modifiées de sorte que, lors de l'apparition des différences de courant dans les deux bobinages (16a, 16b) concernés, on tente d'abord d'égaliser les courants dans les deux bobinages (16a, 16b) par le fait que le courant parcourant le bobinage (16a ou 16b) véhiculant le plus petit courant est intensifié jusqu'à atteindre au maximum un espace minimal (uG) et que, dans le cas où les deux courants ne peuvent pas être égalisés par l'intensification du courant dans le bobinage (16a ou 16b) véhiculant le plus petit courant, le courant parcourant le bobinage (16b ou 16a) véhiculant le plus grand courant est réduit jusqu'à atteindre au maximum un espace (oG) maximum.

2. Véhicule à sustentation magnétique doté de circuits régulateurs (17a, 17b) pour la régulation d'espaces de sustentation (10a, 10b), qui sont conçus lors de son fonctionnement entre une voie de déplacement (2, 3, 4) et un certain nombre d'aimants de sustentation (6b, 6b) fixés au véhicule (1) et dotés de bobinages (16a, 16b), les circuits régulateurs (17a, 17b) comprenant des moyens (19a à 22a et 19b à 22b) pour la régulation de courants électriques, parcourant les bobinages (16a, 16b), de sorte que les espaces de sustentation (10a, 10b) prennent des valeurs de consigne (na, nb) prescrites, **caractérisé en ce qu'**un moyen (24) pour la correction des valeurs de consigne (na, nb) correspondantes en fonction des courants parcourant les bobinages (16a, 16b) est attribué aux circuits régulateurs (17a, 17b) d'au moins deux aimants de sustentation (6a, 6b) voisins, des valeurs limites supérieures et inférieures (oG, uG) étant attribuées aux espaces de sustentation (10a, 10b) et les moyens pour la correction des valeurs de consigne (na, nb) étant aménagés de telle sorte que, lors de l'apparition des différences de courant dans les deux bobinages (16a, 16b) impliqués, on tente d'abord d'égaliser les courants dans les deux bobinages (16a, 16b) par le fait que le courant parcourant le bobinage (16a ou 16b) véhiculant le plus petit courant est intensifié jusqu'à atteindre au maximum un espace (uG) minimum, et dans le cas où les deux courants ne peuvent pas être égalisés par l'intensification du courant dans le bobinage (16a ou 16b) véhiculant le plus petit courant, le courant parcourant le bobinage (16b ou 16a) véhiculant le plus grand courant est réduit jusqu'à atteindre au maximum un espace (oG) maximum.

3. Véhicule à sustentation magnétique selon la revendication 2, **caractérisé en ce que** les circuits régulateurs (17a, 17b) contiennent des actionneurs (22a, 22b) avec des sorties raccordées aux bobinages (16a, 16b) et des circuits de comparaison (19a, 19b) pour une comparaison des valeurs de consigne et des valeurs réelles (na, nb ou sa, sb) des espaces de sustentation (10a, 10b), les moyens (24) contenant un circuit de correction qui est relié côté entrée aux sorties des actionneurs (22a, 22b) et côté sortie aux circuits de comparaison (19a, 19b).

4. Véhicule à sustentation magnétique selon la revendication 2 ou 3, **caractérisé en ce que** le circuit de correction (24) agit dans le sens d'une intensification de courant (réduction de courant) lorsque le courant parcourant le bobinage (16a, 16b) de l'aimant de sustentation (6a, 6b) qui lui est attribué est inférieur (supérieur) au courant parcourant le bobinage (16b ou 16a) de l'autre aimant de sustentation (6b ou 6a).
